# EUROPEAN PATENT APPLICATION

(11) **EP 1 758 192 A2**
(43) Date of publication of application: **28.02.2007**
(21) Application number: 06014456.5
(22) Date of filing: 12.07.2006
(51) Int. Cl.: H01M 8/04, H01M 8/06

(54) **Fuel cell system**

(30) Priority: 23.08.2005 KR 20050077542
(71) Applicant: LG Electronics Inc., Yeongdeungpo-Gu Seoul (KR); LG Chem, Ltd., Yongdungpo-Gu Seoul (KR)
(72) Inventor: Hwang, Young-Jun, Mapo-Gu Seoul (KR); Heo, Seoung-Geun, Gyeonggi-Do (KR)
(74) Representative: TER MEER - STEINMEISTER & PARTNER GbR

(57) **Abstract**

A fuel cell system comprises: a stack unit having a cathode and an anode and generating electricity by an electro-chemical reaction between hydrogen and oxygen; a fuel supply unit for supplying hydrogen to the anode of the stack unit; an air supply unit for supplying air to the cathode of the stack unit; and a gas-liquid separator for removing moisture included in off-gas supplied to a burner of the fuel supply unit from the stack unit. Moisture included in the off-gas is removed by the gas-liquid separator and thus combustion inside the burner is actively performed. As the result, steam is stably supplied to the steam reformer and thus a reforming reaction is smoothly performed, thereby enhancing an entire function of the fuel cell system.

## Description

### BACKGROUND OF THE INVENTION

### 1. Field of the Invention

The present invention relates to a fuel cell system, and more particularly, to a fuel cell system having a gas-liquid separator for removing moisture included in off-gas supplied to a burner of a fuel supply unit from a stack unit.

### 2. Description of the Background Art

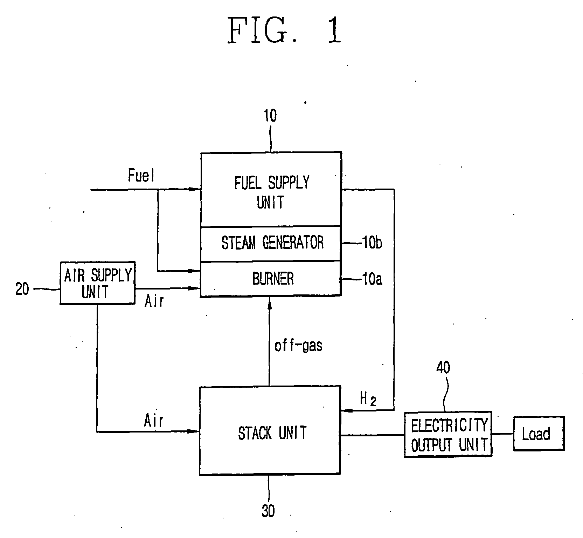

FIG. 1 is a schematic view showing a conventional fuel cell system of a proton exchange membrane fuel cell (PEMFC) method in which a hydrocarbon-based fuel such as LNG, LPG, CH₃OH, gasoline, etc. is used as a fuel by refining only hydrogen by a desulfurizing process, a reforming process, and a hydrogen refining process.

As shown, the conventional fuel cell system comprises a fuel supply unit 10 for supplying only hydrogen extracted from LNG to a stack unit 30, an air supply unit 20 for supplying air to the stack unit 30 and the fuel supply unit 10, a stack unit 30 for generating electricity by supplied hydrogen and air, and an electricity output unit 40 for converting electricity generated from the stack unit 30 into an alternating current and then supplying the alternating current to a load.

As a fuel and steam perform a reforming process in the fuel supply unit 10, hydrogen is generated. In order to generate the steam, the fuel supply 10 is provided with a steam generator 10b and a burner 10a for supplying heat to the steam generator 10b.

In order to drive the burner 10a, a fuel is supplied to the burner 10a, and then off-gas remaining in the stack unit 30 after generating electricity is supplied to the burner 10a. However, since the off-gas supplied from the stack unit 30 is humid gas of a high temperature, the burner 10a is not normally operated. Furthermore, the burner 10a may be turned off due to the moisture included in the off-gas. As the result, the reforming process is not smoothly operated, and thus the fuel cell system is degraded.

### BRIEF DESCRIPTION OF THE INVENTION

Therefore, an object of the present invention is to provide a fuel cell system capable of removing moisture included in off-gas supplied to a fuel supply unit from a stack unit.

To achieve these and other advantages and in accordance with the purpose of the present invention, as embodied and broadly described herein, there is provided a fuel cell system, comprising: a stack unit having a cathode and an anode and generating electricity by an electro-chemical reaction between hydrogen and oxygen; a fuel supply unit for supplying hydrogen to the anode of the stack unit; an air supply unit for supplying air to the cathode of the stack unit; and a gas-liquid separator for removing moisture included in off-gas supplied to a burner of the fuel supply unit from the stack unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic view showing a fuel cell system in accordance with the conventional art;
FIG. 2 is a block diagram showing a fuel cell system according to a first embodiment of the present invention;
FIG. 3 is an enlargement view of a gas-liquid separator of FIG. 2;
FIG. 4 is a view showing a first modification of the gas-liquid separator of FIG. 2;
FIG. 5 is a view showing a second modification of the gas-liquid separator of FIG. 2;
FIG. 6 is a view showing a third modification of the gas-liquid separator of FIG. 2;
FIG. 7 is a block diagram showing an interaction among the gas-liquid separator of FIG. 2, a controller, and a flame sensor;
FIG. 8 is a block diagram showing an interaction among the gas-liquid separator of FIG. 2, a controller, and a temperature sensor; and
FIG. 9 is a block diagram showing an interaction among the gas-liquid separator of FIG. 2, a controller, and a humidity sensor.

### DETAILED DESCRIPTION OF THE INVENTION

Reference will now be made in detail to the preferred embodiments of the present invention, examples of which are illustrated in the accompanying drawings.

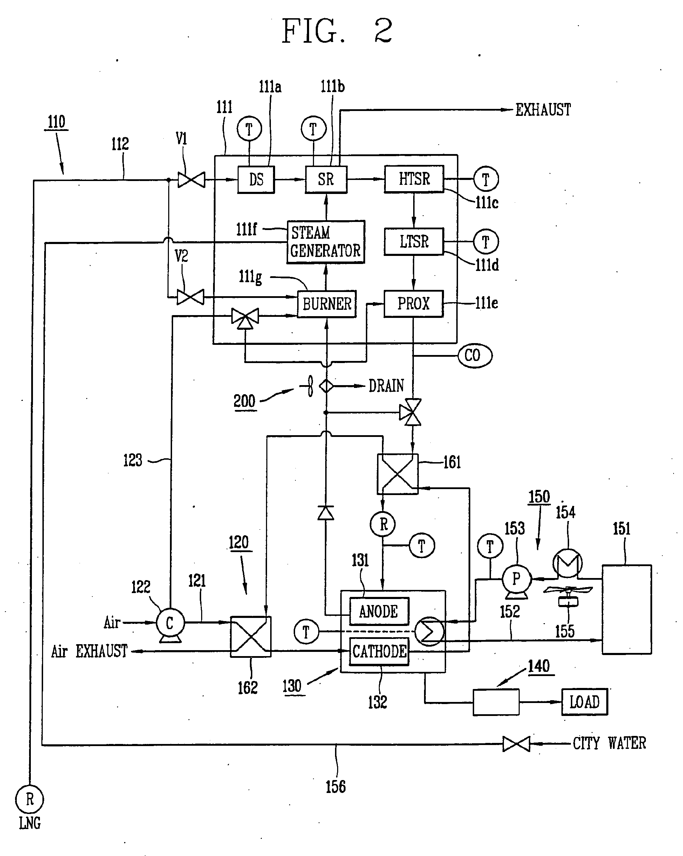

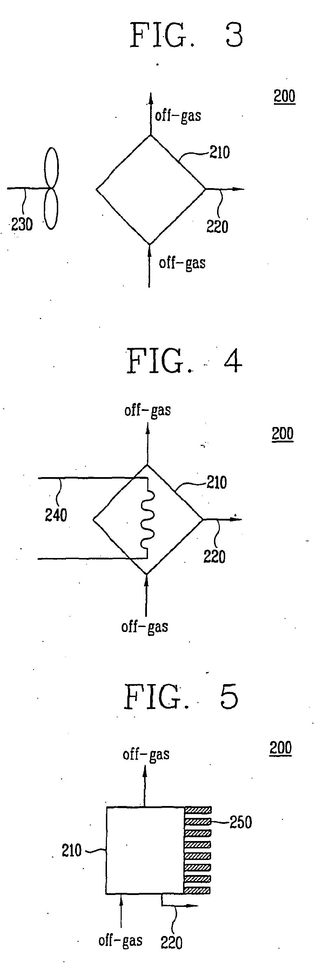

FIG. 2 is a block diagram showing a fuel cell system according to a first embodiment of the present invention, and FIG. 3 is an enlargement view of a gas-liquid separator of FIG. 2.

Referring to FIG. 2, the fuel cell system according to a first embodiment of the present invention comprises a fuel supply unit 110, an air supply unit 120, a stack unit 130, an electricity output unit 140, a water supply unit 150, and a gas-liquid separator 200.

The fuel supply unit 110 comprises a reformer 111 for refining hydrogen from LNG and thereby supplying the hydrogen to an anode 131 of the stack unit 130, and a pipe 112. The reformer 111 includes a desulfurizing reactor 111a for removing sulfur contained in a fuel, a steam reformer 111b for generating hydrogen by reforming a fuel and steam, a high temperature steam reformer 111c and a low temperature steam reformer 111d respectively for additionally generating hydrogen by re-acting carbon monoxide generated after passing through the steam reformer 111b, a partial oxidation reactor 111e for refining hydrogen by removing carbon monoxide included in a fuel by using air as a catalyst, a steam generator 111f for supplying steam to the steam reformer 111b, and a burner 111 g for supplying heat to the steam generator 111f.

The air supply unit 120 for supplying air to a cathode 132 of the stack unit 130 comprises first and second supply lines 121 and 123, and an air supply fan 122. The first air supply line 121 for supplying air in the atmosphere to the cathode 132 is installed between the air supply fan 122 and a second pre-heater 162. The second air supply line 123 for supplying air in the atmosphere to the burner 111g is installed between the air supply fan 122 and the burner 111g.

The stack unit 130 comprises the anode 131 and the cathode 132 so that electric energy and thermal energy can be simultaneously generated by an electro-chemical reaction between hydrogen and oxygen respectively supplied from the fuel supply unit 110 and the air supply unit 120.

The electricity output unit 140 converts electric energy generated from the stack unit 130 into an alternating current, and then supplies the alternating current to a load.

The water supply unit 150 supplies water to the reformer 111 of the fuel supply unit 110 and the stack unit 130, thereby cooling the reformer 111 and the stack unit 130. The water supply unit 150 comprises a water supply container 151 for containing a certain amount of water, a water circulation line 152 for connecting the stack unit 130 and the water supply container 151 by a circulation method, a water circulation pump 153 installed in the middle of the water circulation line 152 and pumping the water inside the water supply container 151, a heat exchanger 154 and a blowing fan 155 installed in the middle of the water circulation line 152 for cooling supplied water, and a city water supply line 156 for supplying water inside the water supply container 151 or city water in drawing to the reformer 111.

Referring to FIGS. 2 and 3, the gas-liquid separator 200 removes moisture included in off-gas exhausted from the stack unit 130 and supplied to the burner 111g of the fuel supply unit 110. The gas-liquid separator 200 comprises a gas-liquid separating body 210, a drain pipe 220, and a cooling fan 230 that is a gas-liquid separation accelerator.

The gas-liquid separating body 210 for temporarily storing off-gas is installed on a pipe for connecting the stack unit 130 to the burner 111g of the fuel supply unit 110. Moisture included in the off-gas is separated from the off-gas in the gas-liquid separating body 210.

The drain pipe 220 is installed at one side of the gas-liquid separating body 210, and through which moisture separated from the off-gas in the gas-liquid separating body 210 is drained out.

The cooling fan 230 is installed at another side of the gas-liquid separating body 210, and accelerates separation between gas and liquid inside the gas-liquid separating body 210. Moisture included in the off-gas is cooled by the cooling fan 230 of the gas-liquid separator 200 thus to be separated from the off-gas. Then, the moisture is drained through the drain pipe 220. Accordingly, a phenomenon that the burner 111g of FIG. 2 is turned off due to the moisture included in the off-gas is prevented.

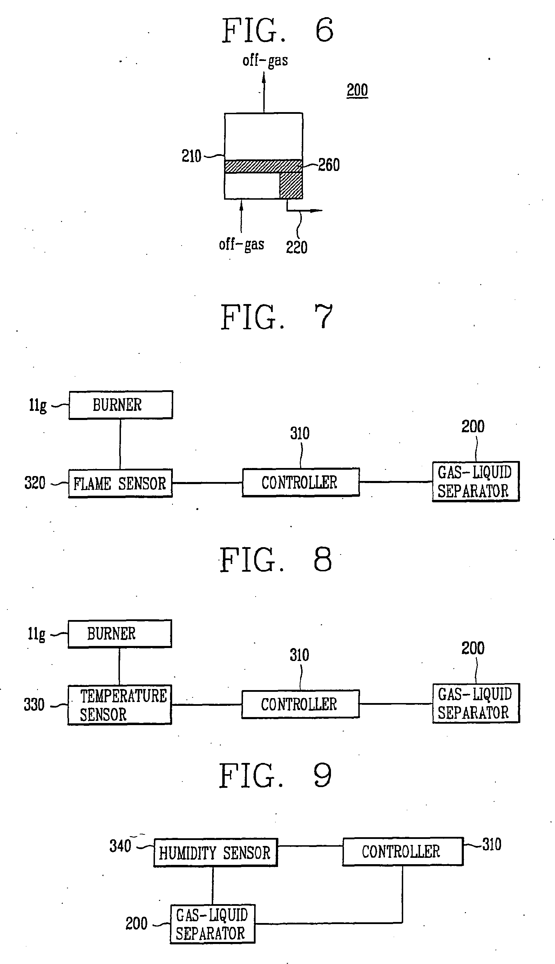

As shown in FIGS. 4 to 6, the gas-liquid separator 200 can be variously constructed. The same reference numerals were given to the same components as the aforementioned components, and thus their explanation will be omitted. FIG. 4 is a view showing a first modification of the gas-liquid separator of FIG. 2, FIG. 5 is a view showing a second modification of the gas-liquid separator of FIG. 2, and FIG. 6 is a view showing a third modification of the gas-liquid separator of FIG. 2.

In the gas-liquid separator 200 of FIG. 4 according to a first modification, a cooling pipe 240 is used instead of the cooling fan 230 as the gas-liquid separation accelerator. The cooling pipe 240 is installed to pass through the inside of the gas-liquid separating body 210 with a curved form in order to increase a thermal exchange area. Moisture included in the off-gas is cooled by the cooling pipe 240 of the gas-liquid separator 200 thus to be separated from the off-gas. Then, the moisture is drained through the drain pipe 220. Accordingly, a phenomenon that the burner 111g of FIG. 2 is turned off due to the moisture included in the off-gas is prevented.

In the gas-liquid separator 200 of FIG. 5 according to a second modification, a cooling fin 250 is used instead of the cooling fan 230 as the gas-liquid separation accelerator. The cooling fin 250 is installed at an outer wall of the gas-liquid separating body 210, and a plurality of the cooling fins 250 are protruding from the gas-liquid separating body 210 with a certain gap in order to increase a thermal exchange area. Moisture included in the off-gas is cooled by the cooling fins 250 of the gas-liquid separator 200 thus to be separated from the off-gas. Then, the moisture is drained through the drain pipe 220. Accordingly, a phenomenon that the burner 111g of FIG. 2 is turned off due to the moisture included in the off-gas is prevented.

In the gas-liquid separator 200 of FIG. 6 according to a third modification, a porous member 260 is used instead of the cooling fan 230 as the gas-liquid separation accelerator. The porous member 260 is installed in the gas-liquid separating body 210. Moisture included in the off-gas passes through the porous member 260 of the gas-liquid separator 200 thus to be separated from the off-gas. Then, the moisture is drained through the drain pipe 220. Accordingly, a phenomenon that the burner 111g of FIG. 2 is turned off due to the moisture included in the off-gas is prevented.

The cooling fan 230, the cooling pipe 240, the cooling fin 250, and the porous member 260 can be simultaneously installed at the gas-liquid separator 200, or can be installed at the gas-liquid separator 200 as a pair therebetween.

In order to enhance a separation function of moisture from the off-gas, a sensor for measuring a combustion degree of the burner 111g and thereby generating a signal, and a controller 310 for controlling the gas-liquid separator 200 by receiving the signal can be further installed at the gas-liquid separator 200.

FIG. 7 is a block diagram showing an interaction among the gas-liquid separator of FIG. 2, a controller, and a flame sensor, FIG. 8 is a block diagram showing an interaction among the gas-liquid separator of FIG. 2, a controller, and a temperature sensor, and FIG. 9 is a block diagram showing an interaction among the gas-liquid separator of FIG. 2, a controller, and a humidity sensor.

The same reference numerals were given to the same components as the aforementioned components, and thus their explanation will be omitted.

Referring to FIG. 7, a flame sensor 320, and a controller 310 for controlling a separation amount of moisture by the gas-liquid separator 200 according to a signal of the flame sensor 320 are further installed at the fuel cell system.

The flame sensor 320 is installed in the burner 111g, and detects a flame of the burner 111 g thus to transmit the signal to the controller 310. The controller 310 controls a speed of the cooling fan 230 or an amount of the cooling water flowing in the cooling pipe 240 according to the signal, thereby controlling a separation amount of gas and liquid.

More concretely, when the flame of the burner 111g is weak, the speed of the cooling fan 230 is increased or the amount of the cooling water flowing in the cooling pipe 240 is increased thereby to increase a separation amount of moisture by the gas-liquid separator 200. On the contrary, when the flame of the burner 111g is strong, the speed of the cooling fan 230 is decreased or the amount of the cooling water flowing in the cooling pipe 240 is decreased. Accordingly, the separation amount of moisture by the gas-liquid separator 200 can be controlled according to a situation.

Referring to FIG. 8, the fuel cell system further comprises a temperature sensor 330, and a controller 310 for controlling a separation amount of gas and liquid by the gas-liquid separator 200 according to a signal of the temperature sensor 330.

The temperature sensor 330 is installed in the burner 111g, and detects a temperature of the burner 111g thus to transmit the signal to the controller 310. The controller 310 controls a speed of the cooling fan 230 or an amount of the cooling water flowing in the cooling pipe 240 according to the signal, thereby controlling a separation amount of gas and liquid.

More concretely, when the temperature inside the burner 111g is low, the speed of the cooling fan 230 is increased or the amount of the cooling water flowing in the cooling pipe 240 is increased thereby to increase a separation amount of moisture by the gas-liquid separator 200. On the contrary, when the temperature inside the burner 111g is high, the speed of the cooling fan 230 is decreased or the amount of the cooling water flowing in the cooling pipe 240 is decreased thereby to decrease a separation amount of moisture by the gas-liquid separator 200. Accordingly, the separation amount of moisture by the gas-liquid separator 200 can be controlled according to a situation.

Referring to FIG. 9, the fuel cell system further comprises a humidity sensor 340, and a controller 310 for controlling a separation amount of gas and liquid by the gas-liquid separator 200 according to a signal of the humidity sensor 340.

The humidity sensor 340 is installed on a pipe for connecting the gas-liquid separator 200 and the burner 111g to each other, and detects humidity included in the off-gas exhausted from the gas-liquid separator 200 and supplied to the burner 111 g. The controller 310 controls a speed of the cooling fan 230 or an amount of the cooling water flowing in the cooling pipe 240 according to the signal, thereby controlling a separation amount of gas and liquid.

More concretely, when humidity included in the off-gas supplied to the burner 111 g is high, the speed of the cooling fan 230 is increased or the amount of the cooling water flowing in the cooling pipe 240 is increased thereby to increase a separation amount of moisture by the gas-liquid separator 200. On the contrary, when the humidity included in the off-gas is low, the speed of the cooling fan 230 is decreased or the amount of the cooling water flowing in the cooling pipe 240 is decreased thereby to decrease a separation amount of moisture by the gas-liquid separator 200. Accordingly, the separation amount of moisture by the gas-liquid separator 200 can be controlled according to a situation.

Hereinafter, an operation of the fuel cell system according to the present invention will be explained with reference to FIGS. 2 to 7.

LNG and steam are reformed in the fuel supply unit 110 and thereby hydrogen is generated. The generated hydrogen is supplied to the anode 131 of the stack unit 130. The air supply unit 120 supplies air to the cathode 132 of the stack unit 130. The stack unit 130 generates electricity by the supplied hydrogen and air, and the generated electricity is converted into an alternating current by the electricity output unit 140 thereby to be supplied to each kind of electric device (load in drawing).

In order to generate steam for a reforming reaction, city water is supplied to the steam generator 111f. Then, off-gas remaining in the stack unit 130 after generating electricity is supplied to the burner 111g in order to generate steam by heating the city water.

Herein, moisture included in the off-gas passes through the gas-liquid separator 200 thereby to be removed. Accordingly, a combustion inside the burner 111g is more effectively performed due to the off-gas of which moisture has been removed.

As aforementioned, in the fuel cell system according to the first embodiment of the present invention, moisture included in the off-gas is removed by the gas-liquid separator 200 and thus combustion inside the burner 111g is actively performed. As the result, steam is stably supplied to the steam reformer 111b and thus a reforming reaction is smoothly performed, thereby enhancing the entire function of the fuel cell system.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell system, comprising:
a stack unit having a cathode and an anode and generating electricity by an electro-chemical reaction between hydrogen and oxygen;
a fuel supply unit for supplying hydrogen to the anode of the stack unit;
an air supply unit for supplying air to the cathode of the stack unit; and
a gas-liquid separator for removing moisture included in off-gas supplied to a burner of the fuel supply unit from the stack unit.

2. The fuel cell system of claim 1, wherein the gas-liquid separator comprises:
a gas-liquid separating body for temporarily storing the off-gas;
a gas-liquid separation accelerator for accelerating a separation of moisture included in the off-gas; and
a drain pipe for draining moisture separated from the off-gas.

3. The fuel cell system of claim 2, wherein the gas-liquid separation accelerator is a cooling fan installed at one side of the gas-liquid separating body.

4. The fuel cell system of claim 2, wherein the gas-liquid separation accelerator is a cooling pipe installed to pass through inside of the gas-liquid separating body.

5. The fuel cell system of claim 2, wherein the gas-liquid separation accelerator is a cooling fin installed at one side of the gas-liquid separating body.

6. The fuel cell system of claim 2, wherein the gas-liquid separation accelerator is a porous member installed in the gas-liquid separating body.

7. The fuel cell system of claim 1, further comprising:
a sensor for measuring a combustion degree of the burner and thereby generating a signal; and
a controller for controlling a separation amount of gas and liquid by the gas-liquid separator according to the signal.

8. The fuel cell system of claim 7, wherein the sensor is a flame sensor for detecting flame inside the burner.

9. The fuel cell system of claim 7, wherein the sensor is a temperature sensor for measuring a flame temperature inside the burner.

10. The fuel cell system of claim 7, wherein the sensor is a humidity sensor for measuring a humidity included in off-gas exhausted from the gas-liquid separator.
